# EUROPÄISCHE PATENTSCHRIFT

(11) **EP 2 645 200 B1**
(45) Veröffentlichungstag und Bekanntmachung des Hinweises auf die Patenterteilung: **14.06.2017**
(21) Anmeldenummer: 12162111.4
(22) Anmeldetag: 29.03.2012
(51) Int. Cl.: G06F 9/48, G06F 1/12, G06F 1/14

(54) **Verfahren und Datenverarbeitungsanlage zum Bereitstellen eines Zeitstempels**
Method and data processing assembly for producing a timestamp
Procédé et installation de traitement des données destinés à préparer un horodateur

(43) Veröffentlichungstag der Anmeldung: 02.10.2013
(73) Patentinhaber: dSPACE digital signal processing and control engineering GmbH, 33102 Paderborn (DE)
(72) Erfinder: Große Börger, Ralf, 33102 Paderborn (DE); Schmidt, Marco, 33102 Paderborn (DE)
(74) Vertreter: Michalski Hüttermann & Partner Patentanwälte mbB

(56) Entgegenhaltungen:
- US-A1- 2006 047 989
- Lui Sha ET AL: "Real-Time Scheduling Theory and Ada", , 30. April 1989 (1989-04-30), Seiten 1-32, XP55032192, Gefunden im Internet: URL:http://www.dtic.mil/dtic/tr/fulltext/u 2/a211397.pdf [gefunden am 2012-07-09]
- "CompactRIO Developers Guide Recommended LabVIEW Architectures and Development Practices for Machine Control Applications Section Three Customizing Hardware Through LabVIEW FPGA i CONTENTS", , 1 December 2009 (2009-12-01), XP055210514, Retrieved from the Internet: URL:http://www.ni.com/pdf/products/us/crio devgudsec3.pdf [retrieved on 2015-09-01]

## Beschreibung

Die vorliegende Anmeldung betrifft ein Verfahren zum Bereitstellen eines Zeitstempels in einem Echtzeitsystem, wobei das Echtzeitsystem eine FPGA und eine CPU umfasst, die miteinander kooperieren, und in dem FPGA wenigstens ein Register implementiert ist, das eine Systemzeit enthält. Weiterhin betrifft die Anmeldung eine Datenverarbeitungsanlage als Echtzeitsystem mit einem FPGA und einer CPU, die miteinander kooperieren, wobei in dem FPGA wenigstens ein Register implementiert ist, das eine Systemzeit enthält, und das Echtzeitsystem zur Durchführung des obigen Verfahrens ausgeführt ist. Auch betrifft die Anmeldung ein Computerprogrammprodukt mit Computer-implementierten Anweisungen, das nach dem Laden und Ausführen in einer geeigneten Datenverarbeitungsanlage die Schritte des obigen Verfahrens ausführt, sowie ein digitales Speichermedium mit elektronisch auslesbaren Steuersignalen, die so mit einem programmierbaren Computersystem zusammenwirken können, dass das obige Verfahren auf dem Computersystem ausgeführt wird.
In verschiedenen Anwendungsbereichen für Datenverarbeitungsanlagen ist die Verwendung einer absoluten Zeitbasis erforderlich, um eine Synchronisation verschiedener Vorgänge durchführen zu können. In verteilten Systemen sind verschieden Verfahren zur Synchronisation bekannt, beispielsweise der Berkeley-Algorithmus, der Christian-Algorithmus oder das Network Time Protocol (NTP). Diese Algorithmen betrachten nur die Verteilung der Zeit zwischen verschiedenen Datenverarbeitungsanlagen.

In Datenverarbeitungsanlagen, insbesondere in Echtzeitsystemen, werden heutzutage mehr und mehr Anwendungen eingesetzt, die auch intern eine zuverlässige Zeitbasis erfordern. Beispielsweise kann es bei der Protokollierung von Ereignissen erforderlich sein, absolute Zeitabstände zwischen den einzelnen Ereignissen zu erfassen, um diese anderweitig verarbeiten zu können. Weiterhin werden heutzutage vermehrt
Datenverarbeitungsanlagen verwendet, die mehrere Prozessoren für die Abarbeitung verschiedener Aufgaben umfassen. Hierbei kann eine gemeinsame Zeitbasis für die verschiedenen CPUs erforderlich sein.

So kommen in Testsystemen für Steuerungselektronik häufig mehrere Prozessoren auf mehreren Boards zum Einsatz. Zur Synchronisation der Software benötigen die Prozessoren eine gemeinsame Zeitbasis. Diese wird auf den Boards üblicherweise nicht von den Prozessoren selbst, sondern von externen Bauteilen wie bspw. FPGAs bereitgestellt. Wenn eine Software einen Zeitstempel benötigt, fragt der entsprechende Prozessor die aktuelle Zeit beim FPGA ab. Diese Abfrage benötigt eine gewisse Zeit. Die Zeitstempel sind z.B. zur Darstellung einzelner Werte in einem Plotter oder zur zeitlichen Darstellung von Echtzeit-Tasks in einem Profiler erforderlich.

Entsprechend erfolgt das Nehmen eines Zeitstempels beim DS1006 Prozessorboard der Firma dSPACE durch Zugriffe auf Register des dSPACE FPGA. Bei der Simulation und Ausführung von Echtzeitmodellen werden relativ häufig Zeitstempel genommen. Zugriffe auf das FPGA sind jedoch relativ teuer im Vergleich zu Zugriffen auf lokale CPU-Variablen, wodurch die Berechnung von Zeitstempeln zeitaufwendig ist und sich Turnaround-Zeiten einzelner Tasks verlängern.

Viele Prozessoren besitzen eine interne Uhr. Eine Abfrage dieser Uhr zur Abfrage der aktuellen Zeit benötigt wesentlich weniger Zeit als eine Abfrage des externen Bauteils, d.h. des FPGA. Allerdings besitzt die interne Uhr eine geringe Genauigkeit und kann von dem Prozessortakt abhängen, weshalb die interne Uhr nicht als Referenz für viele Anwendungen geeignet ist. Außerdem sind die internen Uhren verschiedener Prozessoren nicht miteinander gekoppelt, so dass sie auseinanderlaufen können. In Echtzeitanwendungen ist eine Synchronisation der prozessorinternen Uhr mit der globalen Zeit per Interrupt nicht möglich. Um eine deadline-konforme Abarbeitung der Echtzeittasks zu gewährleisten, können Interrupts der CPUs nicht verwendet werden und werden daher häufig während der Abarbeitung der Echtzeittasks gesperrt. Somit kann die interne Uhr nicht zur Erzeugung von Zeitstempeln verwendet werden. Auch ist eine interne Uhr eines Prozessors von einer in dem FPGA implementierten Systemzeit unabhängig, da sie jeweils eigene Quarze zur Takterzeugung verwenden. Entsprechend sind die internen Uhren verschiedener Prozessoren nicht synchron.

Aus der US 2006/0047989 A1 (D1) ist ein Verfahren zur Synchronisation einer Master CPU mit einer Slave CPU bekannt. Zu einem ersten Zeitpunkt fordert der Slave die Clock der Master CPU an. Zu einem nachfolgenden Zeitpunkt wird von dem Slave die Uhr des Masters empfangen und mit der internen Uhr verglichen. Ausgehend von den beiden Zeitpunkten wird von dem Slave eine Zeit geschätzt und mit der Clock des Masters verglichen.

Ausgehend von dem oben genannten Stand der Technik liegt der Erfindung somit die Aufgabe zugrunde, ein Verfahren der oben genannten Art anzugeben, das ein effektives Bereitstellen eines präzisen Zeitstempels ermöglicht und eine Ausführung von Echtzeitanwendungen beschleunigt.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Die Anmeldung betrifft ein Verfahren zum Bereitstellen eines Zeitstempels in einem Echtzeitsystem, wobei das Echtzeitsystem eine FPGA und eine CPU umfasst, die miteinander kooperieren, und in dem FPGA wenigstens ein Register implementiert ist, das eine FPGA-Systemzeit enthält, umfassend die Schritte Bereitstellen eines CPU-Zählers für eine CPU-Systemzeit, der durch ein Taktsignal der CPU getrieben wird, Bereitstellen eines Synchronisationszählers in der CPU, wobei der Synchronisationszähler durch ein Taktsignal der CPU getrieben wird, Auslesen des CPU-Zählers zur Bereitstellung der CPU-Systemzeit durch eine Echtzeitanwendung, wobei der ausgelesene Wert als Zeitstempel bereitgestellt wird, Abfragen des Synchronisationszählers in der Echtzeitanwendung, und Synchronisieren des CPU-Zählers mit der FPGA-Systemzeit in der Echtzeitanwendung, wenn der Synchronisationszähler einen Wert ausgibt, der seit dem letzten Synchronisieren des CPU-Zählers mit der FPGA-Systemzeit mehr als einer vordefinierten Zeitdauer entspricht.

Die Anmeldung betrifft weiterhin eine Datenverarbeitungsanlage als Echtzeitsystem mit einem FPGA und einer CPU, die miteinander kooperieren, wobei in dem FPGA wenigstens ein Register implementiert ist, das eine FPGA-Systemzeit enthält, und das Echtzeitsystem zur Durchführung des obigen Verfahrens ausgeführt ist.

Die Anmeldung betrifft auch ein Computerprogrammprodukt mit Computer-implementierten Anweisungen, das nach dem Laden und Ausführen in einer geeigneten Datenverarbeitungsanlage die Schritte des obigen Verfahrens ausführt.

Schließlich betrifft die Anmeldung ein digitales Speichermedium mit elektronisch auslesbaren Steuersignalen, die so mit einem programmierbaren Computersystem zusammenwirken können, dass das obige Verfahren ausgeführt wird.

Grundidee der vorliegenden Erfindung ist es also, durch den Synchronisationszähler sicherzustellen, dass der CPU-Zähler mit der Systemzeit regelmäßig synchronisiert wird, sodass das Bereitstempeln von Zeitstempeln durch einen Zugriff auf den so synchronisierten CPU-Zähler beschleunigt werden kann. Die Echtzeitanwendung kann eine oder mehrere Echtzeittasks umfassen, die die Systemzeit auslesen. Soweit die Beanspruchung von Ressourcen durch eine oder mehrere Echtzeitanwendungen oder Echtzeittasks mit hoher Priorität das Synchronisieren des CPU-Zählers verhindert, kann dies über den Synchronisationszähler erfasst werden, um das Bereitstellen eines ungeeigneten Zeitstempels zu verhindern. Somit kann zur Erstellung von Zeitstempeln auf den CPU-Zähler zugegriffen werden, also ein interner Zugriff auf die CPU erfolgt. Dieser Zugriff ist schneller als der Zugriff auf externe Register. Unterbrechungen oder Verzögerungen von Echtzeitanwendungen oder Echtzeittasks können reduziert werden. Generell wird die Ausführung von Echtzeitanwendungen bzw. Echtzeittasks in dem Echtzeitsystem beschleunigt. Die Überprüfung des Synchronisationszählers wird bevorzugt derart durchgeführt, dass das Erreichen eines Schwellwertes, der der Zeitdauer entspricht, überprüft wird. Entsprechend wird beim Synchronisieren des CPU-Zählers ein Zurücksetzen des Synchronisationszählers durchgeführt. Alternativ kann der Synchronisationszähler kontinuierlich weitergezählt werden, während eine Anpassung des Schwellwertes erfolgt, auf dem die Überprüfung basiert. Durch den Schwellwert wird eine maximale Zeit definiert, nach der der CPU-Zähler erneut mit dem Register des FPGA synchronisiert werden muss, sodass CPU-Zähler und Register des FPGA nicht zu weit auseinander driften können. Ausgehend von der Genauigkeit des CPU-Zählers kann somit eine maximale Abweichung des CPU-Zählers von dem Register des FPGA basierend auf Anforderungen an die Systemzeit vorgegeben werden, sodass eine hinreichend genaue Zeit durch den CPU-Zähler bereitgestellt wird. Sowohl der CPU-Zähler wie auch der Synchronisationszähler können prinzipiell inkrementierend oder dekrementierend ausgeführt sein. Auch kann der Synchronisationszähler integral mit dem CPU-Zähler ausgeführt sein, d.h. nur ein Zähler wird in der CPU verwendet. Die einzelnen Schritte des Verfahrens können in unterschiedlicher Reihenfolge durchgeführt werden. Durch die Synchronisation des CPU-Zählers mit dem Register wird in der CPU ein präziser Zeitstempel bereitgestellt.

In vorteilhafter Ausgestaltung der Erfindung umfasst das Synchronisieren des CPU-Zählers mit der FPGA-Systemzeit das Abspeichern des CPU-Zähler und des FPGA-Registerwerts zum Zeitpunkt der Synchronisation, und die Bereitstellung der CPU-Systemzeit durch eine Echtzeitanwendung umfasst das Berechnen der Systemzeit aus dem gespeicherten CPU-Zähler und dem gespeicherten FPGA-Registerwert sowie dem ausgelesenen Wert des CPU-Zählers. Aus den abgespeicherten Werten kann zusammen mit einem jeweils aktuellen Wert des CPU-Zählers jeweils die Systemzeit berechnet werden. Gleichzeitig wird der Aufwand für die Implementierung von Zählern in der CPU reduziert. Auch der Synchronisationszähler kann somit integral mit dem CPU-Zähler ausgebildet sein, da durch einen Vergleich des gespeicherten Wertes des CPU-Zählers zum Zeitpunkt der Synchronisation mit dem jeweils aktuellen Wert des CPU-Zählers die Zeitdauer seit der letzten Synchronisation bestimmt und mit der vordefinierten Zeitdauer verglichen werden kann.

In vorteilhafter Ausgestaltung der Erfindung umfasst das Abspeichern des CPU-Zähler zum Zeitpunkt der Synchronisation das Auslesen des CPU-Zählers vor dem Abspeichern des FPGA-Registerwerts, das Auslesen des CPU-Zählers nach dem Abspeichern des FPGA-Registerwerts, und das Abspeichern eines zeitlichen Mittelwerts des CPU-Zählers vor und nach dem Abspeichern des FPGA-Registerwerts. Dadurch wird die Zeitdauer für das Auslesen des Registers des FPGA berücksichtigt. Durch die Mittelwertbildung wird der abgespeicherte Wert des CPU-Zählers präzise auf den Zeitpunkt der Synchronisation eingestellt.

In vorteilhafter Ausgestaltung der Erfindung wird für die Zeitdauer ein Wert von weniger als 1 s, vorzugsweise weniger als 100 ms, und besonders bevorzugt von etwa 10 ms gewählt. Diese Werte sind beispielsweise abhängig von den Anforderungen an die Synchronizität und/oder Genauigkeit der Zeitstempel und der Genauigkeit des Taktsignals der CPU, von welchem der CPU-Zähler getrieben wird. Die angegebenen Werte für die Zeitdauer können daher abhängig von dem Echtzeitsystem und darauf ausgeführten Echtzeitanwendungen gewählt werden.

In vorteilhafter Ausgestaltung der Erfindung wird der Schritt des Auslesens des CPU-Zählers durch die Echtzeitanwendung zusammen mit den Schritten des Abfragens des Synchronisationszählers in der Echtzeitanwendung und des Synchronisierens des CPU-Zählers mit der FPGA-Systemzeit in der Echtzeitanwendung ausgeführt. Die Synchronisation des CPU-Zählers wird somit regelmäßig beim Auslesen des CPU-Zählers durch die Echtzeitanwendung überprüft, wodurch sich in Übereinstimmung mit der Häufigkeit des Auslesens des CPU-Zählers eine kontinuierliche Überprüfung der Synchronisation und entsprechend auch eine kontinuierliche Synchronisation des CPU-Zählers ergeben. Vorzugsweise ist das Synchronisieren nicht auf das Auslesen des CPU-Zählers beschränkt.

In vorteilhafter Ausgestaltung der Erfindung werden die Schritte des Abfragens des Synchronisationszählers in der Echtzeitanwendung und des Synchronisierens des CPU-Zählers mit der FPGA-Systemzeit in der Echtzeitanwendung vor dem Auslesen des CPU-Zählers durch die Echtzeitanwendung ausgeführt. Somit ist sichergestellt, dass nur eine synchrone Systemzeit aus dem CPU-Zähler für den Zeitstempel bereitgestellt wird.

Eine vorteilhafte Ausgestaltung der Erfindung umfasst den Schritt des periodischen Synchronisierens des CPU-Zählers mit der FPGA-Systemzeit. Durch das periodische Synchronisieren kann das Bereitstellen des Zeitstempels vereinfacht werden, da das Auslesen des Registers, das die Systemzeit enthält, im Zusammenhang mit dem Bereitstellen des Zeitstempels oft entfallen kann. Bevorzugt wird vor dem Auslesen des CPU-Zählers zur Bereitstellung der Systemzeit die Synchronisierung unter Verwendung des Synchronisationszählers überprüft und bei Bedarf wie oben ausgeführt eine Synchronisierung durchgeführt. Vorzugsweise bewirkt das periodische Synchronisieren des CPU-Zählers jeweils ein Zurücksetzen des Synchronisationszählers bzw. eine Anpassung des Schwellwertes, wenn der Synchronisationszähler kontinuierlich weitergezählt wird. Alternativ bewirkt das Synchronisieren das Speichern eines Zählerwertes, welches dem Zeitpunkt der Synchronisation entspricht.

In vorteilhafter Ausgestaltung der Erfindung wird das periodische Synchronisieren des CPU-Zählers mit der FPGA-Systemzeit als Teil einer periodischen Echtzeitanwendung oder Echtzeittask durchgeführt. Das periodische Ausführen der Echtzeitanwendung oder Echtzeittask gewährleistet eine regelmäßige Synchronisierung des CPU-Zählers mit der Systemzeit mit im System vorhandenen Mitteln. Eine selbständige Anwendung muss hierfür nicht bereitgestellt werden. Weiter vorteilhaft ist, dass die Verzögerung der Echtzeitanwendung oder Echtzeittask bekannt ist und sporadische Unterbrechungen von anderen Echtzeitanwendungen oder Echtzeittasks vermieden werden. Die periodische Echtzeittask ist vorzugsweise eine Echtzeittask der Echtzeitanwendung, welche die Systemzeit ausliest.

In vorteilhafter Ausgestaltung der Erfindung wird als die periodische Echtzeitanwendung oder Echtzeittask diejenige mit der größten Periodendauer aus allen periodischen Echtzeitanwendungen oder Echtzeittasks ausgewählt. Somit können Ressourcen für das Synchronisieren des CPU-Zählers mit dem Register, das die Systemzeit enthält, reduziert werden.

In vorteilhafter Ausgestaltung der Erfindung wird das periodische Synchronisieren des CPU-Zählers mit der FPGA-Systemzeit mit einer Periode von weniger als 10 ms, vorzugsweise weniger als 5 ms, und besonders bevorzugt von etwa 1 ms durchgeführt. Bei einer entsprechenden Periode wird sichergestellt, dass der CPU-Zähler regelmäßig synchronisiert wird, um den Zeitstempel jederzeit bereitstellen zu können. Der Wert für die Periode ist beispielsweise abhängig von den Anforderungen an die Synchronizität und/oder Genauigkeit der Zeitstempel und der Genauigkeit des Taktsignals der CPU, von welchem der CPU-Zähler getrieben wird. Die angegebenen Werte für die Periode können daher abhängig von dem Echtzeitsystem und darauf ausgeführten Echtzeitanwendungen unterschiedlich gewählt werden.

In vorteilhafter Ausgestaltung der Erfindung wird das Synchronisieren des CPU-Zählers mit der FPGA-Systemzeit als Anwendung mit niedriger Priorität durchgeführt. Somit kann das Synchronisieren CPU-Zählers mit der Systemzeit durchgeführt werden, ohne die Abarbeitung von Anwendungen mit einer hohen Priorität zu beschränken. Durch den Synchronisationszähler wird gewährleistet, dass die Synchronisation des CPU-Zählers mit der Systemzeit überprüft werden kann, um das Bereitstellen eines ungeeigneten Zeitstempels zu verhindern. Vorzugsweise ist die Anwendung mit niedriger Priorität eine Echtzeitanwendung oder eine Echtzeittask.

In vorteilhafter Ausgestaltung der Erfindung ist vorgesehen, dass das Echtzeitsystem eine Planung für den zeitlichen Ablauf von Echtzeitanwendungen und/oder Echtzeittasks durchführt, und das Synchronisieren des CPU-Zählers mit der FPGA-Systemzeit in einem Zeitfenster durchgeführt wird, das von keiner Echtzeitanwendung oder Echtzeittask belegt ist. Somit werden nur ungenutzte Ressourcen für die Synchronisierung verwendet. Es wird entsprechend erreicht, dass die Echtzeitanwendungen und Echtzeittasks gemäß ihren Anforderungen zuverlässig abgearbeitet werden können. Vorzugsweise bewirkt auch dieses Synchronisieren des CPU-Zählers jeweils ein Zurücksetzen des Synchronisationszählers bzw. eine Anpassung des Schwellwertes, wenn der Synchronisationszähler kontinuierlich weitergezählt wird. Alternativ bewirkt das Synchronisieren das Speichern eines Zählerwertes, welcher dem Zeitpunkt der Synchronisation entspricht.

In vorteilhafter Ausgestaltung der Erfindung weist das Echtzeitsystem eine Mehrzahl CPUs auf, in jeder CPU werden ein CPU-Zähler für die CPU-Systemzeit und ein Synchronisationszähler bereitgestellt, und das Synchronisieren des CPU-Zählers mit der FPGA-Systemzeit wird in der Echtzeitanwendung unabhängig für jede CPU durchgeführt. Somit kann ein gemeinsames Register in dem Echtzeitsystem als Basis für die Synchronisierung verschiedener CPU-Zähler verschiedener CPUs verwendet werden. Die CPUs können miteinander synchronisierte Zeitstempel mit einer hohen Effizienz bereitstellen.

Nachfolgend wird die Erfindung unter Bezugnahme auf die anliegende Zeichnung anhand bevorzugter Ausführungsformen näher erläutert.

Es zeigen
- Fig. 2: ein Ablaufdiagramm eines Verfahrens gemäß der ersten Ausführungsform parallel zu dem in Fig. 1 gezeigten Verfahren zur Durchführung durch eine zweite Echtzeitanwendung,
- Fig. 3: den schematischen Aufbau eines Echtzeitsystems zur Durchführung des erfindungsgemäßen Verfahrens, und

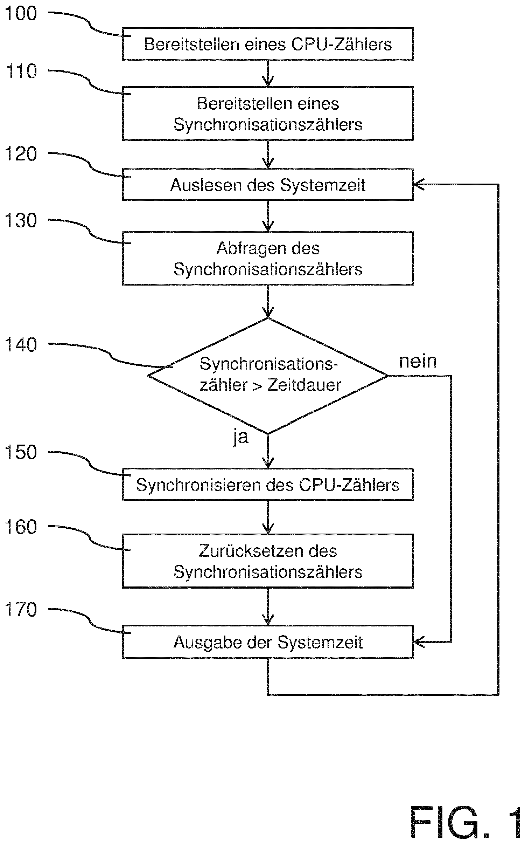

- Fig. 1: ein Ablaufdiagramm eines Verfahrens gemäß einer ersten Ausführungsform der vorliegenden Erfindung zur Durchführung durch eine erste Echtzeitanwendung,

Das erfindungsgemäße Verfahren wird auf beiden CPUs 3 unabhängig durchgeführt. Es umfasst in Schritt 100 das Bereitstellen des CPU-Zählers 6 wie zuvor beschrieben.

Das Verfahren umfasst weiterhin in Schritt 110 das Bereitstellen des Synchronisationszählers 7 wie zuvor beschrieben.

Das Bereitstellen der Zähler 6, 7 umfasst außerdem jeweils eine Initialisierung, wobei der CPU-Zähler 6 mit dem Register 4 synchronisiert und der Synchronisationszähler 7 auf Null zurückgesetzt wird.

In Schritt 120 wird von einer Echtzeittask 10, 11, 12 der Echtzeitanwendung 9, die hier beispielhaft die erste Echtzeittask 10 mit hoher Priorität ist, das Auslesen der Systemzeit aus dem CPU-Zähler 6 gestartet. Im Weiteren wird das in Fig. 1 dargestellte Verfahren unter Bezug auf die erste Echtzeittask 10 mit hoher Priorität beschrieben, ohne dass dies bei jeder Nennung explizit hinzugefügt wird.

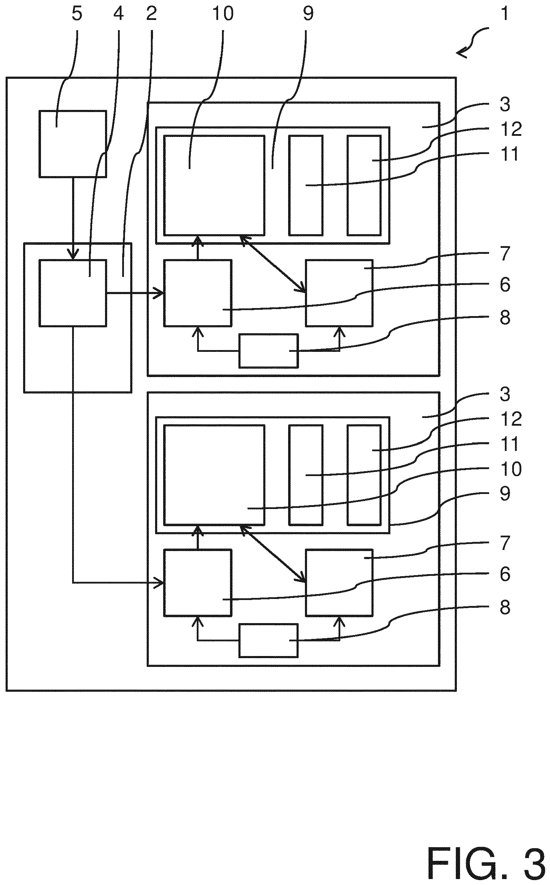

In Schritt 130 erfolgt ein Abfragen des Synchronisationszählers 7 durch die erste Echtzeittask 10, wie auch schematisch in Fig. 3 dargestellt ist.

In Schritt 140 wird überprüft, ob der Synchronisationszähler 7 einen Wert enthält, der größer als eine vorgegebene Zeitdauer, die hier 10 ms in Übereinstimmung mit Anforderungen an die Synchronizität und Genauigkeit der Zeitstempel und an die Genauigkeit des Taktsignals der CPU 3 entspricht, ist. Dadurch wird in Schritt 140 überprüft, ob der CPU-Zähler 6 synchronisiert werden muss. Ist der Wert des Synchronisationszählers 7 kleiner als die vorgegebene Zeitdauer, wird das Verfahren in Schritt 170 fortgesetzt, andernfalls wird das Verfahren mit Schritt 150 fortgesetzt.

In Schritt 150 erfolgt eine Synchronisierung des CPU-Zählers 6 mit dem Register 4. Dazu wird von der ersten Echtzeittask 10 das Register 4 ausgelesen und der ausgelesene Wert in den CPU-Zähler 6 übertragen.

In Schritt 160 erfolgt zusätzlich ein Zurücksetzten des Synchronisationszählers 7 durch die erste Echtzeittask 10, um das erfolgte Synchronisieren des CPU-Zählers 6 anzuzeigen.

In Schritt 170 wird die Systemzeit ausgelesen. Dazu wird der CPU-Zähler 6 durch die erste Echtzeittask 10 ausgelesen und der ausgelesene Wert als Zeitstempel bereitgestellt.

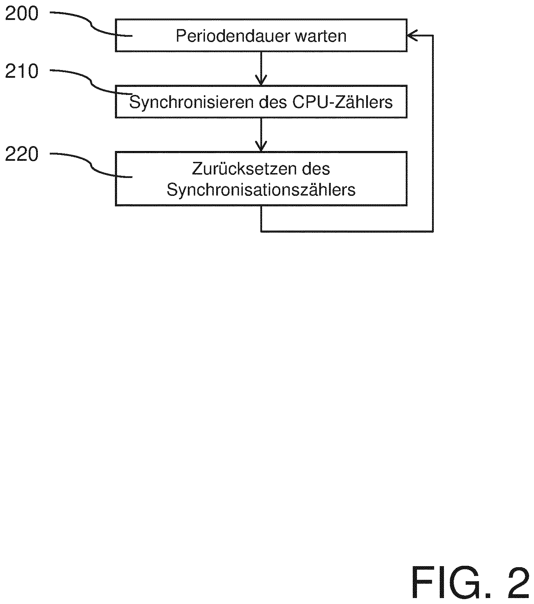

Weiterhin umfasst das erfindungsgemäße Verfahren ein periodisches Synchronisieren des CPU-Zählers 6 mit der Systemzeit in dem Register 4, wie unter Bezug auf Fig. 2 im Weiteren erläutert wird. Das periodische Synchronisieren wird von der der zweiten Echtzeittask 11 mit niedriger Priorität und großer Periodendauer durchgeführt, ohne dass dies bei jeder Nennung explizit hinzugefügt wird. Das in Fig. 2 dargestellte periodische Synchronisieren wird als Teil der zweiten Echtzeittask 11 durchgeführt.

Das periodische Synchronisieren startet in Schritt 200. In der zweiten Echtzeittask 11 wird überprüft, ob eine vorgegebene Periode für das Synchronisieren erreicht ist. Die Periode in diesem Ausführungsbeispiel ist mit 1 ms abhängig von Anforderungen an die Synchronizität und Genauigkeit der Zeitstempel und der Genauigkeit des Taktsignals der CPU 3, von welchem der CPU-Zähler 6 getrieben wird, gewählt. Die Periode entspricht in diesem Ausführungsbeispiel dem doppelten der Periodendauer der zweiten Echtzeittask 11. Entsprechend wird in Schritt 200 überprüft, ob die Periode bereits erreicht wurde. Sobald die Periode erreicht wurde, wird das Verfahren mit Schritt 210 fortgesetzt.

In Schritt 210 wir der CPU-Zähler 6 mit der Systemzeit in dem Register 4 synchronisiert, wie bereit in Schritt 150 prinzipiell erläutert wurde.

In Schritt 220 wird der Synchronisationszähler 7 zurückgesetzt, wie bereit in Schritt 160 prinzipiell erläutert wurde.

Die zuvor beschriebenen Verfahrensschritte werden von den Echtzeittasks 10, 11, 12 der beiden CPUs 3 unabhängig durchgeführt. Dabei wird für das Synchronisieren des CPU-Zählers 6 mit der Systemzeit jeweils das gemeinsame Register 4 in dem Echtzeitsystem 1 als Basis für die Synchronisierung verwendet.

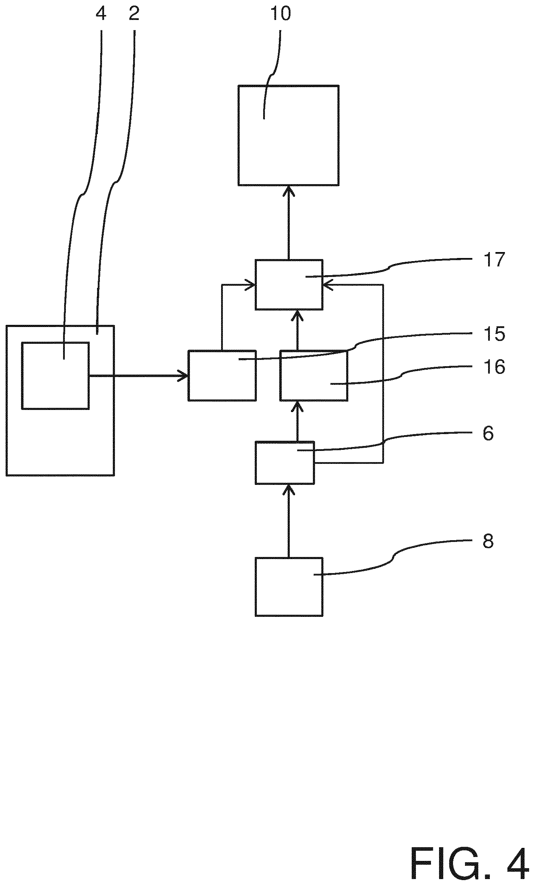

Unter Bezug auf Fig. 4 wird im Weiteren eine zweite Ausführungsform der Erfindung beschrieben. Soweit die zweite Ausführungsform der vorhergehend beschriebenen Ausführungsform entspricht, wird auf diese Bezug genommen. Im Folgenden werden die Unterschiede der zweiten Ausführungsform erläutert.

Die zweite Ausführungsform unterscheidet sich in der Art der Synchronisierung und der Überprüfung der vordefinierten Zeitdauer seit der letzten Synchronisierung von der ersten Ausführungsform. Die CPU 3 umfasst hier als Zähler lediglich einen CPU-Zähler 6, der sowohl für die Berechnung der Systemzeit wie auch für eine Überprüfung der Zeitdauer seit der letzten Synchronisation dient. Der CPU-Zähler 6 wird wie zuvor beschrieben von dem Taktgeber 8 getaktet.

Bei dem Synchronisieren des CPU-Zählers 6 mit der Systemzeit in den Schritten 150 bzw. 210 wird der Wert des FPGA-Registers in einem Zeitspeicher 15 abgelegt. Vor und nach dem Speichern des Wertes des FPGA-Registers 4 in einem Zeitspeicher 15 wird jeweils der CPU-Zähler 6 ausgelesen. Aus den ausgelesenen Werten wird ein zeitlicher Mittelwert des CPU-Zählers 6 vor und nach dem Abspeichern des FPGA-Registerwerts gebildet und in einem Tics-Speicher 16 abgelegt. Dieser Schritt beinhaltet somit entsprechend das Zurücksetzten des Synchronisationszähler in den Schritten 160 bzw. 220.

Abweichend von der ersten Ausführungsform wird somit in Schritt 130 der Wert des Tics-Speichers 16 ausgelesen und mit dem aktuellen Wert des CPU-Zählers 6 verglichen. In diesem Fall wird der Wert des Tics-Speichers 16 von dem aktuellen Wert des CPU-Zählers 6 abgezogen.

Somit wird in Schritt 140 das Ergebnis dieser Subtraktion verwendet, um zu überprüfen, ob seit der letzten Synchronisation die vorgegebene Zeitdauer überschritten wurde.

In Schritt 170 wird auch gemäß der zweiten Ausführungsform die Systemzeit ausgelesen. Die Systemzeit wird aus dem gespeicherten Wert des CPU-Zählers 6 aus dem Tics-Speicher 16, dem gespeicherten Wert des FPGA-Registers 4 aus dem Zeitspeicher 15 sowie einem aktuell ausgelesenen Wert des CPU-Zählers 6 in einer Zeiteinheit 17 berechnet. Dazu wird zu dem Wert des Zeitspeichers 15 eine Zeitdauer entsprechend der Differenz aus dem Wert des CPU-Zählers 6 aus dem Tics-Speicher 16 und dem aktuellen Wert des CPU-Zählers 6 addiert. Dieser Wert stellt die ausgelesene Systemzeit dar.

**Bezugszeichenliste**

| | |
|---|---|
| Echtzeitsystem | 1 |
| FPGA | 2 |
| CPU | 3 |
| Register | 4 |
| Schwingquarz | 5 |
| CPU-Zähler | 6 |
| Synchronisationszähler | 7 |
| Taktgeber | 8 |
| Echtzeitanwendung | 9 |
| erste Echtzeittask | 10 |
| zweite Echtzeittask | 11 |
| dritte Echtzeittask | 12 |
| Zeitspeicher | 15 |
| Tics-Speichers | 16 |
| Zeiteinheit | 17 |

## Patentansprüche

1. Verfahren zum Bereitstellen eines Zeitstempels in einem Echtzeitsystem (1), wobei das Echtzeitsystem (1) eine FPGA (2) und eine CPU (3) umfasst, die miteinander kooperieren, und in dem FPGA (3) wenigstens ein Register (4) implementiert ist, das eine FPGA-Systemzeit enthält, umfassend die Schritte:
Bereitstellen eines CPU-Zählers (6) für eine CPU-Systemzeit, der durch ein Taktsignal der CPU (3) getrieben wird,
Bereitstellen eines Synchronisationszählers (7) in der CPU (3), wobei der Synchronisationszähler (7) durch ein Taktsignal der CPU (3) getrieben wird,
Auslesen des CPU-Zählers (6) zur Bereitstellung der CPU-Systemzeit durch eine Echtzeitanwendung (9), wobei der ausgelesene Wert als Zeitstempel bereitgestellt wird,
Abfragen des Synchronisationszählers (7) in der Echtzeitanwendung (9), und
wenn der Synchronisationszähler (7) einen Wert ausgibt, der seit dem letzten Synchronisieren des CPU-Zählers (6) mit der FPGA-Systemzeit weniger als einer vordefinierten Zeitdauer entspricht, Ausgeben des CPU-Zählers (6) als Zeitstempel, und wenn der Synchronisationszähler (7) einen Wert ausgibt, der seit dem letzten Synchronisieren des CPU-Zählers (6) mit der FPGA-Systemzeit mehr als einer vordefinierten Zeitdauer entspricht, Synchronisieren des CPU-Zählers (6) mit der FPGA-Systemzeit in der Echtzeitanwendung (9), Zurücksetzen des Synchronisationszählers (7) und Ausgeben des CPU-Zählers (6) als Zeitstempel, wobei
Interrupts in der CPU (3) während der Abarbeitung der Echtzeitanwendung (9) gesperrt sind.

2. Verfahren nach Anspruch 1, wobei
das Synchronisieren des CPU-Zählers (6) mit der FPGA-Systemzeit das Abspeichern des CPU-Zähler (6) und des FPGA-Registerwerts zum Zeitpunkt der Synchronisation umfasst, und
die Bereitstellung der CPU-Systemzeit durch eine Echtzeitanwendung (9) das Berechnen der Systemzeit aus dem gespeicherten CPU-Zähler (6) und dem gespeicherten FPGA-Registerwert sowie dem ausgelesenen Wert des CPU-Zählers (6) umfasst.

3. Verfahren nach Anspruch 2, wobei
das Abspeichern des CPU-Zähler (6) zum Zeitpunkt der Synchronisation folgende Schritte umfasst:
das Auslesen des CPU-Zählers (6) vor dem Abspeichern des FPGA-Registerwerts,
das Auslesen des CPU-Zählers (6) nach dem Abspeichern des FPGA-Registerwerts, und
das Abspeichern eines zeitlichen Mittelwerts des CPU-Zählers (6) vor und nach dem Abspeichern des FPGA-Registerwerts.

4. Verfahren nach einem der vorhergehenden Ansprüche, wobei der Schritt des
des Auslesens des CPU-Zählers (6) durch die Echtzeitanwendung (9) zusammen mit den Schritten des Abfragens des Synchronisationszählers (7) in der Echtzeitanwendung (9) und des Synchronisierens des CPU-Zählers (6) mit der FPGA-Systemzeit in der Echtzeitanwendung (9) ausgeführt wird.

5. Verfahren nach Anspruch 4, wobei
die Schritte des Abfragens des Synchronisationszählers (7) in der Echtzeitanwendung (9) und des Synchronisierens des CPU-Zählers (6) mit der FPGA-Systemzeit in der Echtzeitanwendung (9) vor dem Auslesen des CPU-Zählers (6) durch die Echtzeitanwendung (9) ausgeführt werden.

6. Verfahren nach einem der vorhergehenden Ansprüche, zusätzlich umfassend den Schritt
periodisches Synchronisieren des CPU-Zählers (6) mit der FPGA-Systemzeit.

7. Verfahren nach Anspruch 6, wobei
das periodische Synchronisieren des CPU-Zählers (6) mit der FPGA-Systemzeit als Teil einer periodischen Echtzeitanwendung (9) oder Echtzeittask (10, 11, 12) durchgeführt wird.

8. Verfahren nach Anspruch 7, wobei
als die periodische Echtzeitanwendung (9) oder Echtzeittask (10, 11, 12) diejenige mit der größten Periodendauer aus allen periodischen Echtzeitanwendungen (9) oder Echtzeittasks (10, 11, 12) ausgewählt wird.

9. Verfahren nach einem der vorhergehenden Ansprüche, wobei
das Synchronisieren des CPU-Zählers (6) mit der FPGA-Systemzeit als Anwendung mit niedriger Priorität durchgeführt wird.

10. Verfahren nach einem der vorhergehenden Ansprüche, wobei
das Echtzeitsystem (1) eine Planung für den zeitlichen Ablauf von Echtzeitanwendungen (9) und/oder Echtzeittasks (10, 11, 12) durchführt, und
das Synchronisieren des CPU-Zählers (6) mit der FPGA-Systemzeit in einem Zeitfenster durchgeführt wird, das von keiner Echtzeitanwendung (9) oder Echtzeittask (10, 11, 12) belegt ist.

11. Verfahren nach einem der vorhergehenden Ansprüche, wobei
das Echtzeitsystem (1) eine Mehrzahl CPUs (3) aufweist,
in jeder CPU (3) ein CPU-Zähler (6) für die CPU-Systemzeit und ein Synchronisationszähler (7) bereitgestellt werden, und
das Synchronisieren des CPU-Zählers (6) mit der FPGA-Systemzeit in der Echtzeitanwendung (9) unabhängig für jede CPU (3) durchgeführt wird.

12. Datenverarbeitungsanlage als Echtzeitsystem (1) mit einem FPGA (2) und einer CPU (3), die miteinander kooperieren, wobei in dem FPGA (2) wenigstens ein Register (4) implementiert ist, das eine FPGA-Systemzeit enthält,
**dadurch gekennzeichnet, dass**
das Echtzeitsystem (1) zur Durchführung des Verfahrens nach einem der vorhergehenden Ansprüche ausgeführt ist.

13. Datenverarbeitungsanlage nach Anspruch 12,
**dadurch gekennzeichnet, dass**
das Echtzeitsystem (1) eine Mehrzahl CPUs (3) aufweist und zur Durchführung des Verfahrens nach einem der vorhergehenden Ansprüche 1 bis 10 in Verbindung mit Anspruch 11 ausgeführt ist.

14. Computerprogrammprodukt mit Computer-implementierten Anweisungen, das nach dem Laden und Ausführen in einer geeigneten Datenverarbeitungsanlage die Schritte des Verfahrens nach einem der Ansprüche 1 bis 11 ausführt.

15. Digitales Speichermedium mit elektronisch auslesbaren Steuersignalen, die so mit einem programmierbaren Computersystem zusammenwirken können, dass das Verfahren nach einem der Ansprüche 1 bis 11 auf dem Computersystem ausgeführt wird.

## Claims

1. A method for providing a time stamp in a real-time system (1), the real-time system (1) comprising an FPGA (2) and a CPU (3), which cooperate with one another, and at least one register (4), which includes an FPGA system time, being implemented in the FPGA, the method comprising the following steps:
providing a CPU counter (6) for a CPU system time, which is driven by a clock signal of the CPU (3);
providing a synchronization counter (7) in the CPU (3), the synchronization counter (7) being driven by a clock signal of the CPU (3);
reading the CPU counter (6) to provide the CPU system time by a real-time application (9), the read value being provided as a time stamp;
polling the synchronization counter (7) in the real-time application (9); and
outputting the CPU counter (6) as the time stamp when the synchronization counter (7) outputs a value that corresponds to less than a predefined time period since the last synchronization of the CPU counter (6) with the FPGA system time, and synchronizing the CPU counter (6) with the FPGA system time in the real-time application (9) when the synchronization counter (7) outputs a value that corresponds to more than a predefined time period since the last synchronization of the CPU counter (6) with the FPGA system time, resetting the synchronization counter (7) and outputting the CPU counter (6) as a time stamp,
interrupts in the CPU (3) being blocked during the processing of the real-time application (9).

2. The method according to claim 1, wherein
the synchronizing of the CPU counter (6) with the FGPA system time comprises saving the CPU counter (6) and the FPGA register value at the point in time of the synchronization, and
the providing of the CPU system time by a real-time application (9) comprises the calculating of the system time from the stored CPU counter (6) and the stored FPGA register value, as well as the read value of the CPU counter (6).

3. The method according to claim 2, wherein
the saving of the CPU counter (6) at the point in time of the synchronization comprises the following steps:
reading the CPU counter (6) before saving the FPGA register value;
reading the CPU counter (6) after saving the FPGA register value; and
saving a time average of the CPU counter (6) before and after saving the FPGA register value.

4. A method according to any one of the preceding claims, wherein the step of
reading the CPU counter (6) by the real-time application (9) is carried out together with the steps of polling the synchronization counter (7) in the real-time application (9) and of synchronizing the CPU counter (6) with the FPGA system time in the real-time application (9).

5. The method according to claim 4, wherein
the steps of polling the synchronization counter (7) in the real-time application (9) and of synchronizing the CPU counter (6) with the FPGA system time in the real-time application (9) are carried out before the reading of the CPU counter (6) by the real-time application (9).

6. A method according to any one of the preceding claims, additionally comprising the step of
periodically synchronizing the CPU counter (6) with the FPGA system time.

7. The method according to claim 6, wherein
the periodic synchronization of the CPU counter (6) with the FPGA system time is carried out as part of a periodic real-time application (9) or real-time task (10, 11, 12).

8. The method according to claim 7, wherein the periodic real-time application (9) or real-time task (10, 11, 12) selected is that with the longest period duration from all periodic real-time applications (9) or real-time tasks (10, 11, 12).

9. A method according to any one of the preceding claims, wherein the synchronization of the CPU counter (6) with the FPGA system time is carried out as an application having low priority.

10. A method according to any one of the preceding claims, wherein the real-time system (1) carries out a planning for the time sequence of real-time applications (9) and/or real-time tasks (10, 11, 12), and
the synchronization of the CPU counter (6) with the FPGA system time is carried out in a time window that is not occupied by any real-time application (9) or real-time task (10, 11, 12).

11. A method according to any one of the preceding claims, wherein the real-time system (1) comprises a plurality of CPUs (3),
a CPU counter (6) for the CPU system time and a synchronization counter (7) are provided in each CPU (3), and
the synchronization of the CPU counter (6) with the FPGA system time is carried out in the real-time application (9) independently for each CPU (3).

12. A data processing system as a real-time system (1) comprising an FPGA (2) and a CPU (3), which cooperate with one another, at least one register (4), which includes an FPGA system time, being implemented in the FPGA (2),
**characterized in that**
the real-time system (1) is designed to carry out the method according to any one of the preceding claims.

13. The data processing system according to claim 12,
**characterized in that**
the real-time system (1) comprises a plurality of CPUs (3) and is designed to carry out the method according to any one of the preceding claims 1 to 10 in conjunction with claim 11.

14. A computer program product having computer-implemented instructions, which after loading and execution in a suitable data processing system carries out the steps of the method according to according to any one of claims 1 to 11.

15. A digital storage medium having electronically readable control signals, which cooperate with a programmable computer system such that the method according to any one of claims 1 to 11 is carried out in the computer system.

## Revendications

1. Procédé de mise à disposition d'un horodateur dans un système en temps réel (1), dans lequel le système en temps réel (1) comprend un réseau logique programmable FPGA (2) et une unité centrale de traitement CPU (3), qui coopèrent ensemble, et, dans le réseau FPGA (3), au moins un registre (4) est mis en oeuvre qui contient un système de temps de FPGA, comprenant les étapes :
de fourniture d'un compteur de CPU (6) pour un temps de système de CPU qui est mis en marche par un signal d'horloge de l'unité CPU (3),
de fourniture d'un compteur de synchronisation (7) dans l'unité CPU (3), où le compteur de synchronisation (7) est mis en marche par un signal d'horloge de l'unité CPU (3),
de lecture du compteur de CPU (6) pour la fourniture du temps de système de CPU par une application en temps réel (9), où la valeur lue est fournie en tant qu'horodatage,
d'interrogation du compteur de synchronisation (7) dans l'application en temps réel (9), et
lorsque le compteur de synchronisation (7) donne une valeur, qui correspond, depuis la dernière synchronisation du compteur de CPU (6) avec le temps de système de FPGA, à une valeur inférieure à une durée prédéfinie, de considération du compteur de CPU (6) comme étant l'horodateur, et lorsque le compteur de synchronisation (7) donne une valeur qui, depuis la dernière synchronisation du compteur de CPU (6) avec le temps de système de FPGA, correspond à une valeur supérieure à une durée prédéfinie, de synchronisation du compteur de CPU (6) avec le temps de système de FPGA dans l'application en temps réel (9), de renouvellement du réglage du compteur de synchronisation (7) et de considération du compteur de CPU (6) comme étant l'horodateur, où
des interruptions dans l'unité CPU (3) pendant le traitement de l'application en temps réel (9) sont bloquées.

2. Procédé selon la revendication 1, dans lequel
la synchronisation du compteur de CPU (6) avec le temps de système de FPGA comprend la sauvegarde du compteur de CPU (6) et de la valeur de registre de FPGA au moment de la synchronisation, et comprend
la fourniture du temps de système de CPU par une application en temps réel (9), le calcul du temps de système à partir du compteur de CPU (6) stocké et de la valeur de registre de FPGA stockée, ainsi que la valeur lue du compteur de CPU (6).

3. Procédé selon la revendication 2, dans lequel
la sauvegarde du compteur de CPU (6) au moment de la synchronisation comprend les étapes suivantes :
la lecture du compteur de CPU (6) avant la sauvegarde de la valeur de registre de FPGA,
la lecture du compteur de CPU (6) après la sauvegarde de la valeur de registre de FPGA, et
la sauvegarde d'une valeur temporelle moyenne du compteur de CPU (6) avant et après la sauvegarde de la valeur de registre de FPGA.

4. Procédé selon l'une des revendications précédentes, dans lequel l'étape
de lecture du compteur de CPU (6) est effectuée par l'application en temps réel (9) simultanément avec les étapes d'interrogation du compteur de synchronisation (7) dans l'application en temps réel (9) et de synchronisation du compteur de CPU (6) avec le système de temps de FPGA dans l'application en temps réel (9).

5. Procédé selon la revendication 4, dans lequel
les étapes d'interrogation du compteur de synchronisation (7) dans l'application en temps réel (9) et de synchronisation du compteur de CPU (6) avec le temps de système de FPGA dans l'application en temps réel (9) sont effectuées avant la lecture du compteur de CPU (6) par l'application en temps réel (9).

6. Procédé selon l'une des revendications précédentes, comprenant de manière complémentaire l'étape
de synchronisation périodique du compteur de CPU (6) avec le temps de système de FPGA.

7. Procédé selon la revendication 6, dans lequel
la synchronisation périodique du compteur de CPU (6) avec le temps de système de FPGA est effectuée sous la forme d'une partie d'une application en temps réel (9) périodique ou d'une tâche en temps réel (10, 11, 12).

8. Procédé selon la revendication 7, dans lequel,
en temps qu'application en temps réel (9) périodique ou tâche en temps réel (10, 11, 12), celles avec les périodes les plus longues parmi toutes les applications en temps réel (9) ou tâches en temps réel (10, 11, 12) périodiques sont choisies.

9. Procédé selon l'une des revendications précédentes, dans lequel
la synchronisation du compteur de CPU (6) avec le temps de système de FPGA est effectuée comme une application de moindre priorité.

10. Procédé selon l'une des revendications précédentes, dans lequel
le système en temps réel (1) exécute une planification pour le déroulement dans le temps d'applications en temps réel (9) et/ou de tâches en temps réel (10, 11, 12), et
la synchronisation du compteur de CPU (6) avec le temps de système de FPGA est effectuée dans une fenêtre temporelle qui n'est occupée par aucune application en temps réel (9) ou tâche en temps réel (10, 11, 12).

11. Procédé selon l'une des revendications précédentes, dans lequel
le système en temps réel (1) présente une multitude d'unités CPU,
dans chaque CPU (3), un compteur de CPU (6) pour le temps de système de CPU et un compteur de synchronisation (7) sont fournis, et
la synchronisation du compteur de CPU (6) avec le temps de système de FPGA est effectuée de manière indépendante pour chaque CPU (3) dans l'application en temps réel (9).

12. Installation de traitement de données sous forme d'un système en temps réel (1) avec un réseau logique programmable FPGA (2) et une unité centrale de traitement CPU (3), qui coopèrent ensemble, où, dans le réseau FPGA (3) au moins un registre (4) est mis en oeuvre qui contient un système de temps de FPGA,
**caractérisée en ce que**
le système en temps réel (1) est conçu pour l'exécution du procédé selon l'une des revendications précédentes.

13. Installation de traitement de données selon la revendication 12,
**caractérisée en ce que**
le système en temps réel (1) présente une multitude d'unités CPU (3) et est conçu pour l'exécution du procédé selon l'une des revendications précédentes 1 à 10 en liaison avec la revendication 11.

14. Produit de programme informatique avec des instructions mises en oeuvre par ordinateur, qui exécute, après le chargement et l'exécution dans une installation de traitement de données appropriée les étapes du procédé selon l'une des revendications 1 à 11.

15. Support de stockage numérique avec des signaux de commande lisibles de manière électronique qui peuvent agir conjointement avec un système informatique programmable de telle manière que le procédé selon l'une des revendications 1 à 11 est exécuté sur le système informatique.
